(19) Europäisches Patentamt
European Patent Office
Office européen des brevets

(11) **EP 3 907 470 B1**

(12) **EUROPEAN PATENT SPECIFICATION**

(45) Date of publication and mention of the grant of the patent:
**22.02.2023 Bulletin 2023/08**

(21) Application number: **21172546.0**

(22) Date of filing: **06.05.2021**

(51) International Patent Classification (IPC):
*G01C 21/20* (2006.01)   *G08G 3/02* (2006.01)
*B63B 79/10* (2020.01)

(52) Cooperative Patent Classification (CPC):
**G01C 21/203; B63B 79/10; G08G 3/02**

(54) **SYSTEM AND METHOD FOR SUPPORTING AN OPERATOR FOR NAVIGATION**

SYSTEM UND VERFAHREN ZUR UNTERSTÜTZUNG EINER BEDIENPERSON ZUR NAVIGATION

SYSTÈME ET PROCÉDÉ DE SOUTIEN D'UN OPÉRATEUR PENDANT LA NAVIGATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.05.2020 IT 202000010105**

(43) Date of publication of application:
**10.11.2021 Bulletin 2021/45**

(73) Proprietor: **Fincantieri S.p.A.**
**34121 Trieste (IT)**

(72) Inventors:
• **SEBASTIANI, Luca**
**I-16129 GENOVA (IT)**
• **DI SUMMA, Maria**
**I-70126 BARI (IT)**
• **VIGANO, Giovanni Paolo**
**I-20133 MILANO (IT)**
• **SACCO, Marco**
**I-23900 LECCO (IT)**
• **CASSARA, Pietro**
**I-56124 PISA (IT)**
• **GOTTA, Alberto**
**I-56124 PISA (IT)**
• **FIGARI, Massimo**
**I-16145 GENOVA (IT)**
• **MARTELLI, Michele**
**I-16145 GENOVA (IT)**
• **ZACCONE, Raphael**
**I-16145 GENOVA (IT)**

(74) Representative: **Mozzi, Matteo et al**
**Jacobacci & Partners S.p.A.**
**Via Senato, 8**
**20121 Milano (IT)**

(56) References cited:
**WO-A1-2020/084232     US-A1- 2013 238 232**
**US-A1- 2019 360 810     US-A1- 2020 090 414**

• **Anonymous: "MQTT (Message Queuing Telemetry Transport) protocol - Wikipedia", , 21 March 2019 (2019-03-21), XP055624410, Retrieved from the Internet: URL:https://en.wikipedia.org/w/index.php?title=MQTT&oldid=888839246 [retrieved on 2019-09-20]**

**Description**

Field of the invention

The present invention relates to the naval sector, in particular to a system and method for supporting an operator for navigation.

Technological background

A very important aspect related to the safety of a ship or vessel and of the personnel aboard is certainly the choice of maneuvers to which an operator must resort to reduce as far as possible the risk of collision of the ship with an obstacle, be it another ship, a floating structure, a person at sea or the mainland.

In this regard, nowadays ships are typically equipped with hardware and software logics capable of collecting information representative of the ship and the obstacle and, from a computational point of view, process them to provide useful information to an operator to support the operator in evaluating which maneuvering decision to make.

The time required to collect and process this information, some of which can also be obtained remotely (e.g. through a satellite connection), and how the information is presented to the operator are crucial aspects for providing effective and reliable decision-making support, which is not always possible with the technologies currently employed.

Therefore, the need is strongly felt for a navigation decision-making support system to assist, in the most effective and reliable manner possible, a shipboard operator who must make timely decisions about the navigation maneuvers to be implemented to avoid a possible collision between the ship and an obstacle, be it a movable obstacle (such as another ship or a person at sea) or a fixed obstacle (e.g. such as the mainland, a quay or another ship at berth in a harbor), also taking into account additional boundary conditions such as the need to maneuver in narrow channels or close to the coast or in poor visibility conditions (operations at night or in the presence of fog) or, in any case, in bathymetric conditions such as to require an appropriate assessment by the operator.

US 2013/238232 A1 discloses an apparatus and method for preventing a collision between vessels.

US 2019/360810 A1 discloses video sensor fusion and model based virtual and augmented reality systems and methods.

US 2020/090414 A1 discloses an image generating device which generates an image indicative of a situation around a water-surface movable body. Document Anonymous: "MQTT (Message Queueing Telemetry Transport) Protocol - Wikipedia)" - March 21, 2019 - discloses the MQTT system consisting of clients communicating with a server, often called a "broker".

Summary

It is an object of the present invention to devise and make available a system for supporting an operator for navigation, which allows to at least partially solve the drawbacks highlighted above with reference to the background art, in particular which allows to support, in the most effective and reliable manner possible, an operator in assessing in a timely manner which decisions to make about the navigation maneuvers to be implemented on a ship to avoid a possible collision between the ship and an obstacle, be it a movable obstacle, such as another ship or a person at sea, or a fixed obstacle, such as mainland or a quay or another ship at berth in a harbor, taking into account other boundary conditions, such as the need to maneuver in narrow channels or close to shore or in such bathymetric conditions as to require an appropriate assessment by the operator before performing any maneuver.

Such an object is achieved by means of a system for supporting an operator for navigation according to claim 1.

A further object of the present invention is a method thereof for supporting an operator for navigation according to claim 12.

Brief description of the figures

Further features and advantages of the system and the method thereof according to the invention will be apparent from the following description which illustrates preferred embodiments, given by way of indicative, non-limiting examples, with reference to the accompanying figures, in which:

- figure 1 diagrammatically shows an example of a ship on which a system and method thereof for supporting an operator for navigation according to the present invention may be used;
- figure 2 shows, by means of a block chart, a system for supporting an operator for navigation, according to an embodiment of the invention;
- figure 3 shows, by means of a block chart, a component of the system shown in figure 2, according to an embodiment of the invention;

- figure 4 shows, by means of a block chart, a further component of the system in figure 2, according to an embodiment of the invention;
- figure 5 shows, by means of a block chart, a communication logic architecture of the system in figure 2;
- figure 6 shows, by means of a block chart, a portion of a system for supporting an operator for navigation, according to an embodiment of the invention;
- figure 7a shows, by means of a block chart, a further portion of the system for supporting an operator for navigation, according to an embodiment of the invention, to be considered in combination with figure 6;
- figure 7b shows, by means of a block chart, a further portion of the system for supporting an operator for navigation, according to a further embodiment of the invention, to be considered in combination with figure 6;
- figure 8 shows, by means of a block chart, a communication mode implemented in the system in figures 6 and 7b, according to an embodiment of the invention;
- figure 9 shows, by means of a block chart, a method for supporting an operator for navigation, according to an embodiment of the invention, and
- figure 10 diagrammatically shows a reference system employed in an example of calculation executable in a collision identification operation executable by the system for supporting an operator for navigation according to the present invention.

Detailed description

With reference to the aforementioned figures, reference numeral 100 as a whole indicates a system for supporting an operator for navigating, hereinafter also named only support system or simply system, according to the invention.

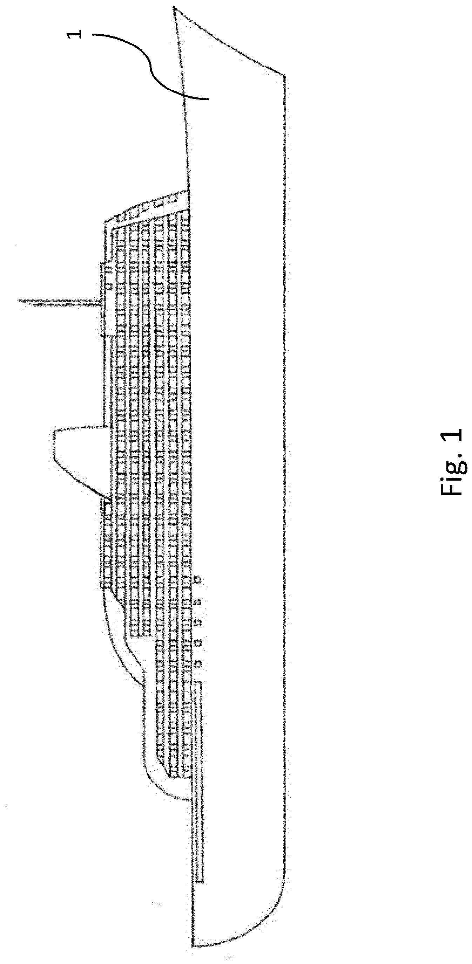

An example of a ship, indicated by reference numeral 1 as a whole, is shown in figure 1.

For the purpose of the present description, ship means any vessel usable for cruises, recreational and tourist service, e.g. a cruise ship, as shown in figure 1, or any other ship, such as for example ships usable in the military sector, merchant ships, work ships, etc.

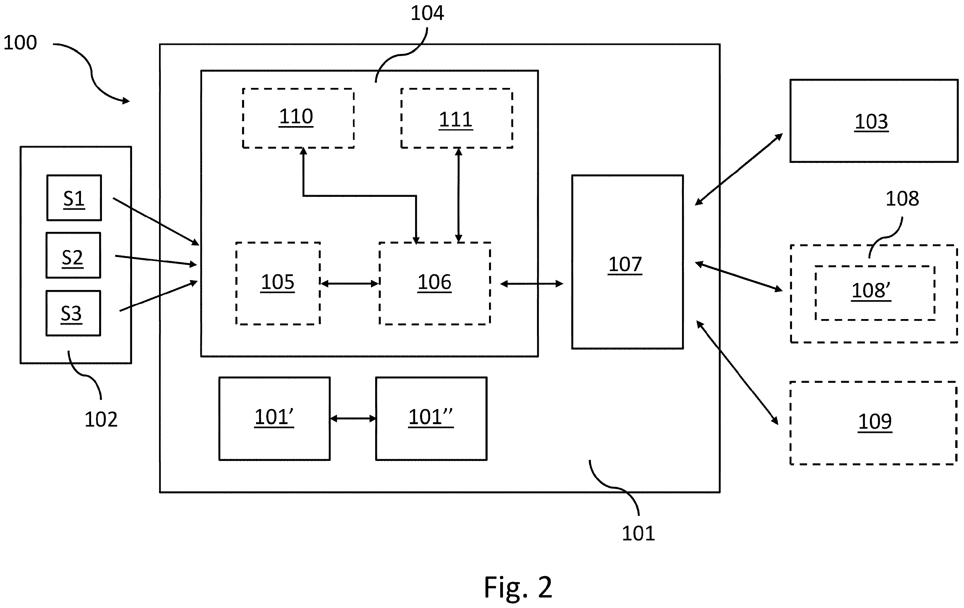

With reference in particular to figure 2, the system 100 comprises a main shipboard control unit 101 (diagrammatically shown in the figure).

The system 100 further comprises a plurality of sources of information 102 representative of a ship.

The plurality of sources of information 102 representative of a ship is operatively connected to the main shipboard control unit 101.

The plurality of sources of information 102 comprises sensors, detection devices, cameras, navigation devices, or systems distributed shipboard or otherwise capable of detecting information representative of the ship, even if remotely.

In figure 2, the plurality of sources of information 102 comprises a first source of information S1, a second source of information S2, and a third source of information S3.

For the purpose of the present description, "information representative of a ship" means the information detectable by the variety of sources of information 102 relatively to any component, room, or instrument of the ship (e.g., engines, rudders, navigation systems, etc.), which may provide useful information for the navigation, control, and monitoring of the ship.

Examples of such information are the rudder angle, the ship speed, the engine power output, the ship coordinates, the ship course, and so on.

Turning back to figure 2, the system 100 further comprises at least one user interface 103 operatively connected to the main shipboard control unit 101.

As described in greater detail below, the at least one user interface 103 allows a shipboard bridge operator to receive support for navigation.

In an embodiment, the at least one user interface 103 is a visor module wearable by a shipboard bridge operator.

In a further embodiment, the at least one user interface 103 is a display of a local computer available to a shipboard bridge operator.

According to a further embodiment, in combination with the preceding ones, shown with dashed lines in figure 2, the system 100 further comprises at least one ground control station 108 operatively connected to the main shipboard control unit 101.

In this embodiment, the at least one ground control station 108 comprises a respective user interface 108'.

In this manner, the ground-based operator can provide further navigation support to the shipboard operator, if necessary.

In an embodiment, the user interface 108' of the at least one ground control station 108 is a display of a (desktop) computer of the at least one ground control station 108 made available to an operator of the at leaast one ground control station 108.

In an embodiment, either as an alternative or in combination with the preceding one, the user interface 108' of the at least one ground control station 108 is a visor module wearable by an operator of the at least one ground control station 108.

As further described hereinafter, the information received by the user interface 108' of the at least one ground control station 108 is the same information received by the at least one user interface 103 of the shipboard bridge operator.

The information received from the user interface 108' of the at least one ground control station 108 are optionally coupled to a video stream received from at least one shipboard camera.

In a further embodiment, either in combination or as an alternative to the preceding one, the system 100 further comprises at least one further user interface 109 operatively connected to the main shipboard control unit 101.

The at least one further user interface 109 is a display of a handheld device (e.g., a smartphone, tablet, Personal Digital Assistant) of a further shipboard operator.

Again, the information received by the at least one further user interface 109 is the same as the images received by the at least one user interface 103 of the shipboard bridge operator.

With reference to figure 2, the main shipboard control unit 101 comprises a respective data processing system 101', e.g. a microcontroller or a microprocessor.

Furthermore, the main shipboard control unit 101 comprises a respective memory unit 101", operatively connected to the data processing unit 101'.

The memory unit 101" can be either internal or external (e.g., as shown in figure 2) to the data processing unit 101'.

It is worth noting that the memory unit 101" is configured to store one or more program codes executable by the data processing unit 101" and the data generated and processed following the execution of one or more program codes.

The data processing unit 101' is configured to execute the operations for which the main shipboard control unit 101 is intended.

Indeed, as shown again in figure 2, the main shipboard control unit 101 comprises a navigation simulation module 104.

The navigation simulation module 104 is a software module executable by the data processing unit 101' after loading one or more respective program codes stored in the memory unit 101".

In greater detail, the navigation simulation module 104 is configured to determine information representative of a simulated anti-collision route of the ship, based on the information provided by the plurality of sources of information 102.

In greater detail, the simulated anti-collision route of the ship is provided to a bridge operator for supporting navigation to suggest useful maneuvers to reduce the probability of collision.

The purpose of the anti-collision route determination method is to identify, following the detection of another obstacle, e.g. another ship in a given position, at a given speed and following a set course, whether a collision with such a ship is possible, and if so, to suggest an evasive maneuver to the bridge operator.

The incident obstacle can be identified by means of radar and an AIS (Automatic Identification System), at a distance in the order of tens of miles.

The determinations made by such instruments are affected by measurement error, thus a minimum safety distance (e.g., half a mile or one mile) from the obstacle at which ship 1 may pass has been set, below which the bridge operator will be required to maneuver sufficiently in advance.

The evasive maneuver corresponds to a set rudder angle and/or a set course angle which allows to avoid the obstacle and, if such an action were not sufficient, may be reinforced by reducing the speed of the ship.

It is worth noting that this order of priority (rudder angle, speed) is suitable in relatively open waters.

However, it is worth noting that such an order of priority may need to be revised in confined and busy spaces, such as canals.

The result of the *Collision Detection* operation is a logical variable, plus a set amount of accessory information.

Given as known the initial position of the ship 1, the speed of the ship 1, the initial position of the obstacle, and the speed of the obstacle, the navigation simulation module 104 is configured to determine a path interception point PIP, i.e., the intersection point of the path of the ship and the path of the obstacle, and the time to reach the time path interception point TPIP (Time Path Interception Point).

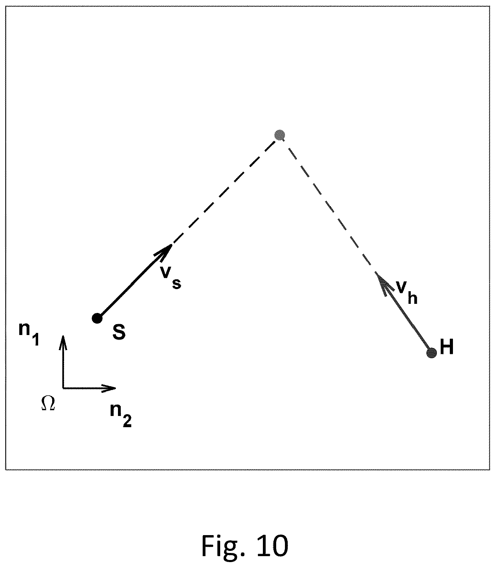

It is worth noting that an example of PIP and TPIP calculation is described below in a respective APPENDIX (relative to *collision detection*) with the support of figure 10.

A collision occurs if both the ship and the obstacle (ship) reach the PIP at the same instant, or rather, at "excessively" close instants.

For safety reasons, the ships must always keep a set minimum safety distance taking into account the real operating conditions.

An approach to *collision detection* thus consists in establishing that the difference between TPIPs of ship and obstacle is greater than a set threshold time.

The navigation simulation module 104 is configured to calculate the set threshold time as a function of the set minimum safety distance.

An example of set threshold time calculation is described in the APPENDIX below.

Such a calculation corresponds to verifying that the obstacle is at a distance greater than the set minimum safety distance in the instant of time in which the ship 1 engages the PIP.

However, there is no guarantee that the obstacle will not breach the set minimum safety distance before or after such an instant of time.

The navigation simulation module 104 is further configured to determine the minimum distance between the obstacle and the ship 1 in order to verify whether the obstacle will pass at a minimum distance from the ship 1 smaller than the set minimum safety distance.

An example of calculation of the minimum distance between obstacle and ship and the successive verification is described in the APPENDIX below.

The navigation simulation module 104 is further configured to select an actuated rudder angle and/or course angle to be suggested to the shipboard operator to avoid the danger of a possible collision.

It is worth noting that this selection is made in compliance with constraints in terms of the performance of the shipboard apparatuses as well as the maneuvering performance of the hull of the ship.

If it is detected that the obstacle has exceeded the set minimum safety distance, the navigation simulation module 104 is configured to set a minimum rudder angle (e.g., equal to 1 degree) and, following an evolution of the ship, re-verify whether or not the safety condition is satisfied.

If so, the navigation simulation module 104 is configured to suggest the last set rudder angle value.

If not, the navigation simulation module 104 is configured to set a further rudder angle, of the same magnitude but opposite sign.

If the safety distance verification is still negative, the navigation simulation module 104 is configured to increase the rudder angle.

The navigation simulation module 104 will continue this operation iteratively, increasing the magnitude of the rudder angle each time, until the safe condition is reached.

It is worth noting that the safety condition is verified by the navigation simulation module 104, assuming that the ship 1, once subjected to the hydrodynamic forces generated by the rudder, moves in a uniform circular motion, in which the radius of curvature, or rather the tactical diameter, is known.

It is worth noting that the radius of curvature and tactical diameter are assessed beforehand, off-line, and inserted within the program code executable by the navigation simulation module in the form of a response surface.

This response surface is a function of the forward speed of the ship 1 and the implemented rudder angle, possibly also of the wind strength and direction, so as to have a realistic behavior of the navigation simulation module 104.

The variant suggesting the change of course is based on the same principle, the only substantial difference being that the verification is carried out assuming that the ship is moving with uniform rectilinear motion in a new direction.

Based on the information provided by the plurality of sources of information 102, the navigation simulation module 104 is further configured to determine information representative of the status of the ship.

In this regard, the navigation simulation module 104 is advantageously configured to determine information representative of the status of the ship taking into account operational constraints, shipboard apparatuses and machinery, and ship maneuvering performance 1.

"Information representative of the status of the ship" means information which is useful to an operator during navigation to monitor, and thus control, the conditions of the ship.

Examples of such information may be information relating to the course of the ship, the speed of the ship, the weather forecast, the sea conditions, the conditions of the rooms of the ship, the engine room, the need to maneuver in narrow channels, or close to the shore or otherwise in bathymetric conditions requiring specific assessment, and so forth.

In greater detail, the navigation simulation module 104 is configured to verify that the suggested rudder angle or course variation is really feasible based on the real operating condition.

It is worth noting that operational constraints need to be taken into account because mathematical models are implemented in the navigation simulation module 104, which represent the state of the system and the effects of a change in rudder angle or course angle on it.

"Operational constraints" means the rating plate limits of the machinery or systems, e.g. maximum engine power output, rpm of the drive line, maximum rudder angle, maximum torque provided by the steering gear, and so forth.

It is worth noting that during maneuvers, the operating points of the machines are a function of the dynamic response of the system. The shipboard apparatuses in transients are often required to have higher performance than at normal design points.

"Maneuvering performance of the ship" means the ability of the ship to perform given maneuvers.

For example, each ship can perform an evolution maneuver with a given minimum diameter. The minimum diameter depends on several factors, which are taken into account, such as for example the shape of the hull, the speed at which the maneuver is carried out, the hydrodynamic characteristics of the steering gear (e.g., profile and area of the rudder), and the marine weather conditions.

The detection of a correct maneuver in narrow channels or close to the coast is a functionality obtained following the aforementioned *Collision Detection* method, an example of which will be described in the APPENDIX with the support of figure 10.

It is worth noting that in identifying a possible *collision avoidance,* additional information from third party ships or vessels (i.e. other than ship 1 and the ship deemed to be an obstacle) may be used, which is provided by shipboard instrumentation (AIS, ECDIS, ARPA, etc.), which may be operationally connected to the main shipboard control unit 101.

The navigation simulation module 104 is further configured to generate a message comprising information representative of a simulated anti-collision route of the ship and information representative of the status of the ship.

The navigation simulation module 104 is configured to make such a message available over a data communication channel, such as a wireless type channel.

In this manner, a shipboard operator could advantageously have such a message available wherever the person may be on the ship.

In an embodiment, shown with dashed lines in figure 2, the navigation simulation module 104 comprises a detection module 105 of the information representative of the ship.

The detection module 105 is a software module executable by the data processing unit 101' after loading respective one or more program codes stored in the memory unit 101".

The detection module 105 is configured to detect the information representative of the ship received from the plurality of sources of information 102.

It is worth noting that the detection module 105 is further configured to digitize the information received from the plurality of sources of information if some of the sources of information of said plurality were able to detect and output such information in the form of analog signals.

In this embodiment, shown with dashed lines in figure 2, the navigation simulation module 104 further comprises an anti-collision route determination module 106 operatively connected to the detection module 105.

The anti-collision route determination module 106 is a software module executable by the data processing unit 101' after loading respective one or more program codes stored in the memory unit 101".

The anti-collision route determination module 106 is configured to determine information representative of a simulated anti-collision route of the ship 1 based on the information received from the detection module 105.

To this end, it is worth noting that the anti-collision route determination module 106 is configured to process the information received from the detection module 105 as a function of the type of information received from each source of information S1, S2, S3.

The information representative of a simulated anti-collision route of the ship 1 is, for example, the position, speed, heading angle of the ship 1 and, in the case of a movable obstacle, the position, speed, heading angle, while, in the case of a fixed obstacle, only the position.

Furthermore, the anti-collision route determination module 106 is configured to determine information representative of the status of the ship 1 based on the information received from the detection module 105.

Furthermore, the anti-collision route determination module 106 is configured to generate a message comprising information representative of a simulated anti-collision route of the ship (e.g., an evasive maneuver - e.g., a set course angle or rudder angle - to be suggested to a shipboard bridge operator) and information representative of the status of the ship.

Again, the anti-collision route determination module 106 is configured to make such a message available over a data communication channel.

According to an embodiment, shown with dashed lines in figure 2, in combination with the preceding one, the navigation simulation module 104 further comprises a propulsion simulation submodule 110 and a maneuver simulation submodule 111.

The propulsion simulation submodule 110 and the maneuver simulation submodule 111 are configured to assess whether the suggested evasive maneuver is really feasible based on the shipboard systems.

In greater detail, the propulsion simulation submodule 110 is configured to verify that the implementation of the evasive maneuver does not cause overloads to shipboard machinery and is compatible with the operational constraints of the propulsion system and maneuvering members.

The operational constraints were defined above.

The maneuver simulation submodule 111 is configured to verify that the suggested evasive maneuver is really achievable taking into account the maneuvering performance of the ship and weather conditions.

The maneuvering performance of the ship was defined above.

Turning back, in general, to figure 2, the central control unit 101 further comprises a message routing module 107 operatively connected to the navigation simulation module 104.

The message routing module 107 is a software module executable by the data processing unit 101' after loading respective one or more program codes stored in the memory unit 101".

The message routing module 107 is configured to exchange messages asynchronously.

In particular, the message routing module 107 is configured to send the message made available on the data communication channel by the navigation simulation module 104 to a set plurality of recipients interested in receiving the messages made available on the data communication channel.

The message routing module 107 can also be named message broker.

Turning back, in general, to figure 2, the at least one user interface 103 is configured as a recipient interested in receiving a message made available on the data communication channel.

The at least one user interface 103 is further configured, e.g., through a software application installed directly on the at least one user interface 103, to display processing of such a message overlapping with or substituting a real navigation scenario visible by a shipboard bridge operator.

The operator can receive support during navigation by being able to display, e.g. overlapping the visible navigation scenario, the simulated anti-collision route and other representative information on the status of the ship without having to look away from the visible navigation scenario and being able to assess the suggestions and indications contained in the support received in real-time directly on such a visible navigation scenario.

If the at least one user interface 103 is a wearable visor module, the shipboard bridge operator can advantageously view the information concerning the ship and the surrounding environment, such as the bathymetry, or the intensity and direction of the wind, in real-time.

Furthermore, in the event of a predicted collision, an alert can be displayed with additional information, such as the position and speed of the obstacle, the point of shortest distance, and suggested tactical turns to avoid a possible collision.

According to an embodiment, in combination with any of those described above, the message routing module 107 is configured to implement a so-called Publish/Subscribe routing mode.

In this embodiment, the navigation simulation module 104 is configured to publish the generated message on the data communication channel.

For this reason, in this embodiment, the navigation simulation module 104 is representative of a software entity named *PublisherProxy.*

A *"Publisher proxy"* comprises a first interface configured to communicate with the plurality of sources of information 102, which need to publish the data generated by each source of information according to the respective technological modes to the message routing module 107 (message broker), and a second interface for communicating with the message routing module 107 (message broker).

In other words, the *"Publisher proxy"* performs a mediation function between elements speaking different languages (plurality of sources of information 102), which despite this need to talk to the message broker which speaks a language of its own.

In this embodiment, the message routing module 107 is configured to send the message published on the data communication channel by the navigation simulation module 104 based on the subscriptions received from a set plurality of recipients interested in receiving messages published on the data communication channel.

In this embodiment, the set plurality of recipients, thus also the at least one user interface 103, is representative of software entities named *SubscriberProxies.*

A *"Subscriber proxy"* comprises a first interface configured to communicate with the message routing module 107 (message broker) and a second interface to communicate with the set plurality of recipients interested in receiving the messages published on the data communication channel, each according to their respective technological modes.

In other words, the *"Subscriber proxy"* performs a mediating function between the message broker which speaks a language of its own, and the set plurality of recipients interested in receiving the messages published on the data communication channel, each of which speaks a different language.

According to a further embodiment, the message routing module 107 is configured to implement a so-called queuing routing mode.

In this embodiment, one of the recipients of the set plurality of recipients interested in receiving the message made available by the navigation simulation module 104 on the data communication channel (e.g., the at least one user interface 103) is configured to send a request to a specific queue corresponding to the messagge routing module 107, which is configured to send a response on the same queue.

According to a further embodiment, as an alternative to the preceding one, the message routing module 107 is configured to implement a so-called store/forward routing mode.

In the embodiment, as an alternative to the preceding ones, the message routing module 107 is configured to store the messages made available on the data communication channel by the navigation simulation module 104 and to send them to the set plurality of recipients interested in receiving messages provided on the data communication channel.

It is worth noting that one or more messages are forwarded whenever the message routing module 107 detects a new subscription to a topic (defined in detail below), which contains the one or more messages.

According to an embodiment, in combination with any of those described above, the message routing module 107 is further configured to perform further operations on the messages to be routed, such as for example:

- managing the security of the messages to be routed;
- assigning a priority to the messages to be routed;
- sorting the routing of messages to be routed.

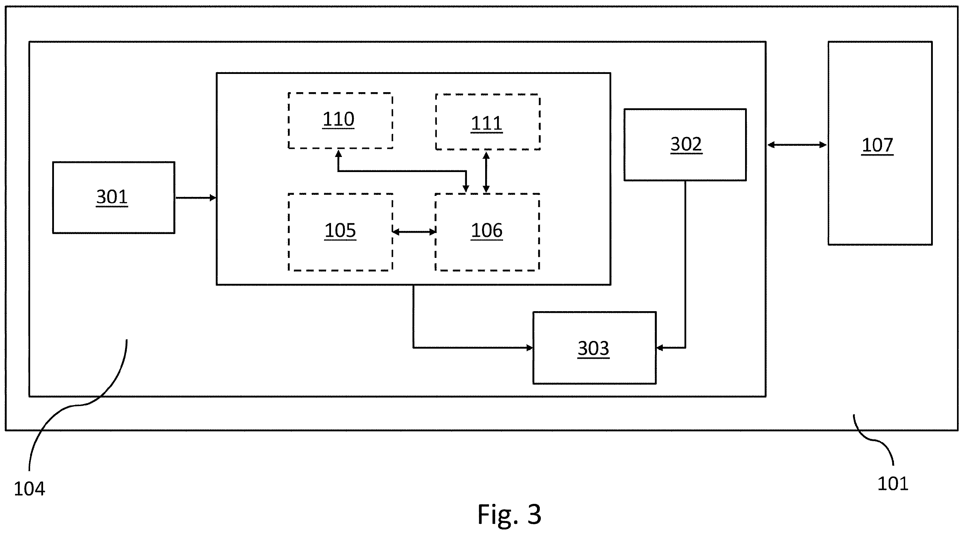

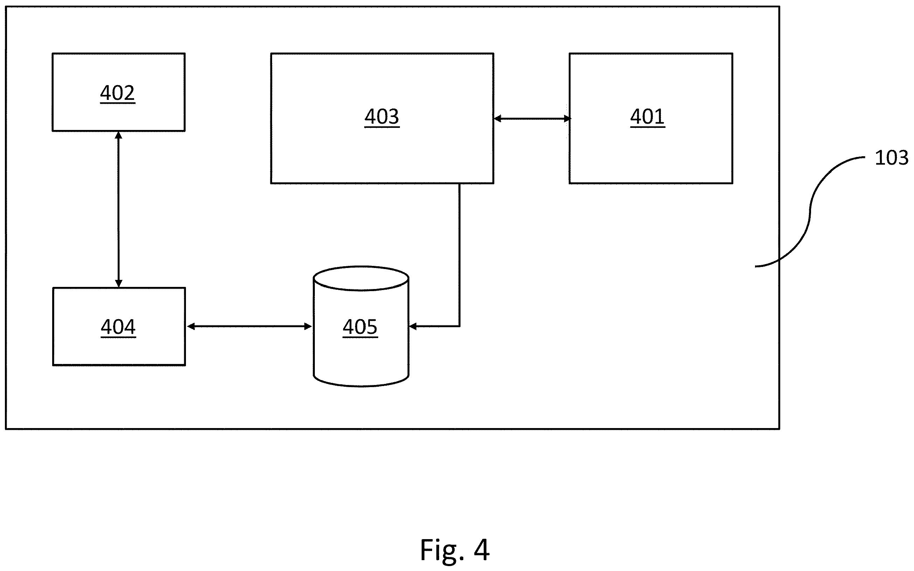

With reference now also to figures 3 and 4, the main shipboard control unit 101 (in particular the navigation simulation module 104) and the at least one user interface 103 will now be described in greater detail, from a functional point of view, in the case in which the communication model (i.e. message routing mode) implemented by the message routing module 107 (message broker) is a Publish/Subscribe mode.

In this embodiment, the communication model is based, e.g., on a protocol called MQTT (MQ Telemetry Transport or Message Queue Telemetry Transport), i.e., an ISO standard lightweight messaging protocol of *Publish/Subscribe* type placed on top of the TCP/IP protocol stack.

The MQTT protocol is used in situations in which low impact is required and in which the bandwidth is limited.

It is worth noting that "low impact request" means a prediction, set by the protocol, of an operation, which uses a low number of hardware-software resources, and thus can be used also by sensors and/or systems with limited hardware-software resources.

The use of this protocol requires the presence of the message routing module 107 as a message broker.

It is worth noting that this mode advantageously allows to make the operations of the *publisher* nodes which generate the messages to be transmitted independently of those of the *subscriber* nodes interested in receiving the transmitted messages.

This asynchronous communication is made possible by the presence of a third component such as the message routing module (message broker) 107 itself.

In this embodiment, the message routing module 107 is configured to receive and store information sent by the *publisher* nodes and to sort it to the *subscriber* nodes that request it.

It is worth noting that *subscriber* nodes must register with the message routing module 107, through subscription, before operating.

In greater detail, the correspondence between the message to be routed and a respective message destination *subscriber* node is identified in a string of alphanumeric characters (called a topic) used by the *publisher* node when publishing a message on the data communication channel and by the *subscriber* node when subscribing.

According to this embodiment, the *Publish/Subscribe* communication mode allows the *publisher* nodes and the *subscriber* nodes to transmit or receive data, respectively, according to the policies which best suit their needs without depending on each other.

Furthermore, this mode of communication allows to encapsulate heterogeneous types of information, such as:

- data coming from high-level applications (e.g., applications for typical automation uses which transmit the states of the systems connected to them through the use of text strings or messages codified with standards, such as for example, the JSON standard - JavaScript Object Notation);
- data from sensors or actuators distributed shipboard;
- data coming from other logical entities, within the same communication infrastructure, (e.g., all entities generating text messages to communicate the information needed to provide decision support to the shipboard bridge operator).

In the context of maritime communications, possible *publisher* nodes could be: the operators of a ship, the command and control logics of the ships, the application services operating shipboard as well as those operating in one or more ground control stations.

In this context, *subscriber* nodes may be the application services of other ships or one or more ground control stations, as well as the shipboard operators.

It is worth noting that a communication architecture of this type is also very useful for informing and updating an operator, whether shipboard or ashore, on the status of specific resources in which the party is interested or, more generally, on the status of the ship.

Furthermore, the *Publish/Subscribe* communication mode advantageously allows an operator to control different types of resources at the same time (one-to-many interaction), control which can be performed provided that a set of events is generated and reported by the *publisher* nodes (event-driven control).

Referring to figure 3, the navigation simulation module 104 comprises a respective application layer 301, i.e., the layer of the ISO/OSI MQTT protocol which comprises the plurality of communication protocols, which cooperate with the user interfaces and the user applications.

The application layer 301 is configured to receive the information representative of the ship provided by the plurality of sources of information 102.

The information representative of the ship is provided to the information detection module 105 and the anti-collision route determination module 106, both of which are described above.

As mentioned above, the anti-collision route determination module 106 is configured to output information representative of a simulated anti-collision route of the ship (e.g., an evasive maneuver - e.g., a set course angle or rudder angle - to be suggested to a shipboard bridge operator) and information representative of the status of the ship.

Furthermore, the propulsion simulation submodule 110 and the maneuver simulation submodule 111 of the navigation simulation module 104, described above, are also configured to output respective information.

Referring again to figure 3, the navigation simulation module 104 comprises a publishing module 302 for the MQTT protocol (MQTT *PublisherProxy).*

The publication module 302 is configured to receive information from the anti-collision route determination module 106, the propulsion simulation submodule 110, and the maneuvering simulation submodule 111 and to encapsulate such information in messages to be provided to the message routing module 107 (also shown in figure 3) for publication on the data communication channel, employing the MQTT protocol, to the benefit of the plurality of recipients interested in receiving a message made available on the data communication channel by the navigation simulation module 104.

The navigation simulation module 104 further comprises a data serialization module 303.

The data serialization module 303, which precedes the publication module 302, is configured to encode information received from the anti-collision route determination module 106, the propulsion simulation submodule 110, and the maneuver simulation submodule 111 before transmitting it to the publication module 302.

Referring to figure 4, the at least one user interface 103 comprises a respective graphical user interface module 401.

The graphical user interface module 401 may be a visor module wearable by an operator or a virtual dashboard made available to an operator.

In a further embodiment, as an alternative to the preceding one, the graphical user interface module 401 is a display of a local computer at the disposal of an operator.

According to a further embodiment, the graphical user interface module 401 is a display of a ground control station computer made available to an operator.

Returning to figure 4, the at least one GUI 103 comprises an MQTT protocol subscription module 402 (MQTT *SubscriberProxy*).

The subscription module 402 is configured to receive the message published by the message routing module 107, employing the MQTT protocol, on the data communication channel.

For this purpose, the subscription module 402 is registered with the message routing module 107.

The at least one user interface 103 further comprises a respective application layer 403.

The application layer 403 is configured to provide the graphical user interface module 401 with a processing of such a message to be displayed, by the graphical user interface module 401, either overlapping or substituting the real navigation scenario visible to a shipboard bridge operator.

The at least one user interface 103 further comprises a data deserialization module 404.

The subscription module 402 is operatively connected to the application layer 403 through the data deserialization module 404.

The data deserialization module 404 is configured to encode data from the subscription module 402 before transmitting them to the application layer 403.

The at least one user interface 103 further comprises a memory module 405, such as a cache-type memory, operatively connected between the data deserialization module 404 and the application layer 403.

The memory module 405 is configured to store data from the data deserialization module 404 before transmitting them to the application layer 403.

In this manner, the memory module 405 is configured to absorb delays between when a datum arrives from the data deserialization module 404 and when the same datum is transmitted to the application layer 403, then to the graphical user interface module 401, which is ready to receive it.

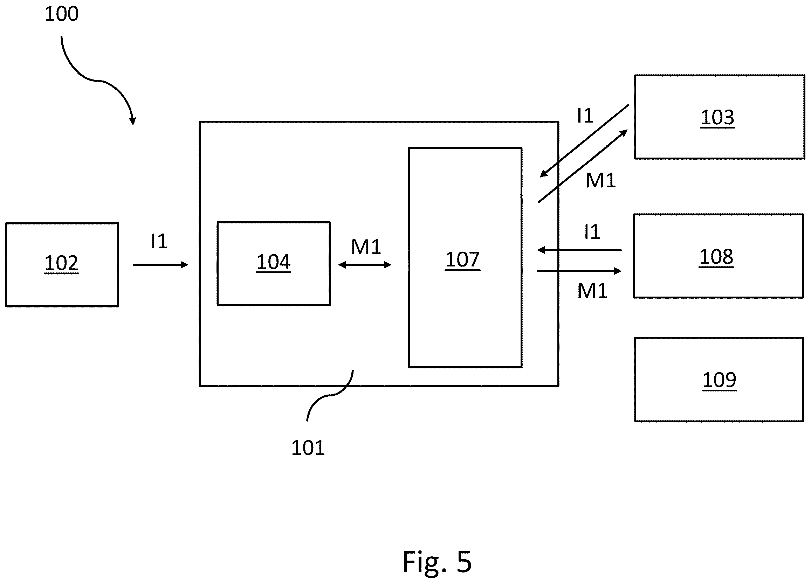

A logical communication architecture of the system 100 will now be described referring now to figure 5.

A source of information 102, such as a gyrocompass, provides information I1 representative of the ship, such as a heading angle value of the gyrocompass that detected such information, to the main shipboard control unit 101.

The information I1 is processed by the navigation simulation module 104, which encapsulates the information I1 in a message M1 published on the data communication channel.

The message M1 is received by the message routing module 107, which will route it to those recipients who subscribed at the time of subscribing to the message routing module 107 to receive messages made available on the data communication channel.

In figure 5, the recipients of the message M1 which subscribed I1 to the data routing module are the at least one user interface 103 and the at least one user interface 108' of the ground control station 108 but not the at least one further user interface 109 (e.g. of a portable device of another shipboard operator).

Within each user interface, the message M1 is received by the respective subscription module, which extracts the data therein, and sends a processing to the actual recipient, i.e., the graphical user interface module.

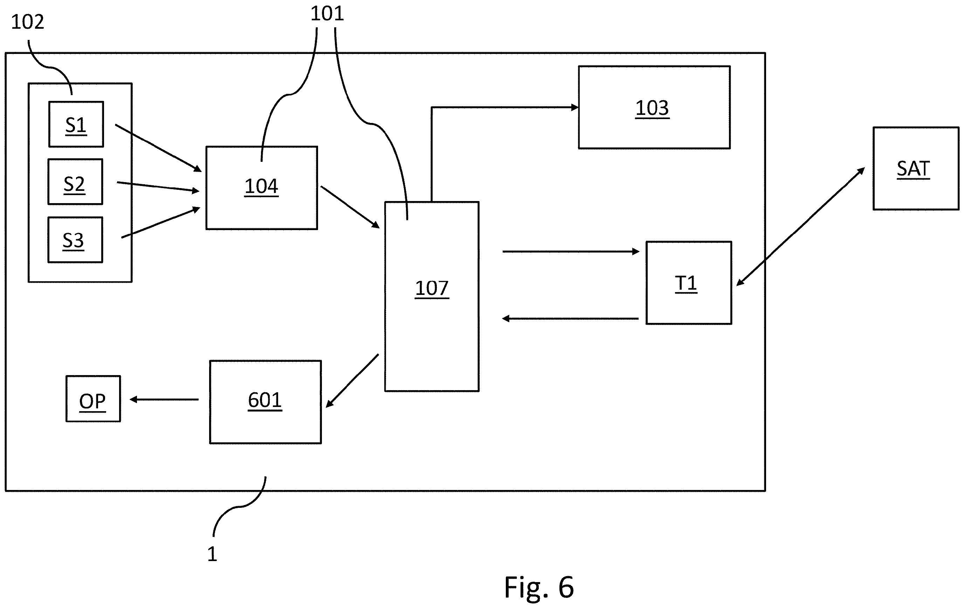

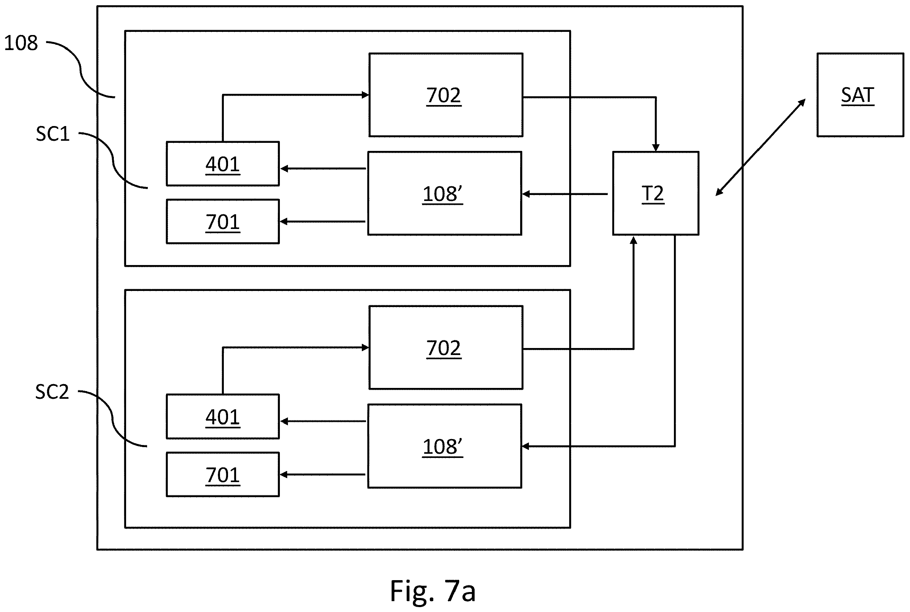

A communication architecture of the system 100 and operation of the system 100 according to an embodiment form will now be described referring now to figures 6 and 7a.

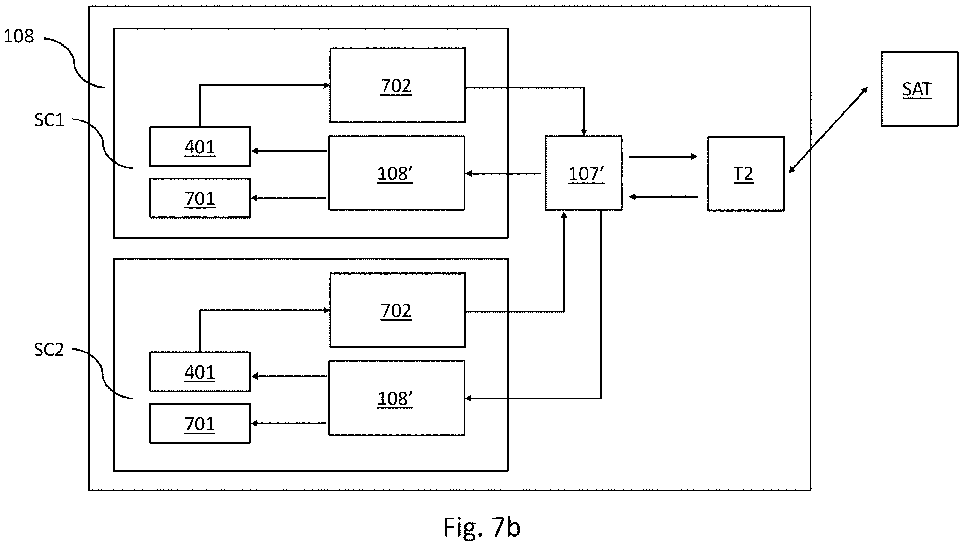

The communication architecture of the system 100 comprises two macro entities, a first entity corresponding to the ship 1 (shown in figure 6) and a second entity corresponding to the ground control station 108 (shown in figures 7a and 7b), which was described above.

The ship 1 and the ground control station 108 are operatively connected to each other through a satellite module SAT shown in figure 6 and in figures 7a and 7b for the sake of clarity.

Thus, the communication between the ship 1 and the ground control station 108 is through a two-way satellite communication channel.

In greater detail, the ship 1 comprises a first satellite terminal T1, e.g., a Return Channel Satellite Terminal RCST, and the ground control station 108 comprises a second satellite terminal T2, e.g., a Gateway.

The first satellite terminal T1 and the second satellite terminal T2 are configured to communicate with each other through the satellite module SAT on a two-way satellite communication channel.

The plurality of sources of information 102, in figure 6 a first sensor S1, a second sensor S2, and a third sensor S3, provide information representative of the ship 1 to the navigation simulation module 104 *(PublisherProxy)*.

In this embodiment, only one shipboard *PublisherProxy* module is present.

According to a further embodiment, multiple shipboard *PublisherProxy* modules may be provided.

Returning to figure 6, based on the received information representative of the ship, the navigation simulation module 104 of the main control unit 101 of the ship 1 generates a message encapsulating the data in an MQTT packet, comprising the information representative of a simulated anti-collision route of the ship and the information representative of the status of the ship.

The navigation simulation module 104 publishes such a message on a data communication channel.

The message routing module 107 of the main control unit 101 routes the message to the recipients who have subscribed an interest in receiving messages posted on the data communication channel.

Therefore, the message is received by the at least one user interface 103 (*SubscriberProxy*), e.g., a wearable visor module, of a shipboard operator (bridge operator).

The at least one user interface 103 displays a processing of the message overlapping the navigation scenario visible to the shipboard bridge operator.

Such a processing contains indications on any suggested anti-collision route and other information representative of the status of the ship 1.

In this manner, the bridge operator receives navigation support in a timely and reliable manner and in real-time.

Meanwhile, the same message is received by the user interface 108' (*SubscriberProxy*) of the ground control station 108.

The user interface 108' of the ground control station 108 processes the received message and provides a processing to the respective user interface module 401, which displays such a processing overlapping the navigation scenario to an operator of the ground control station 108.

It is worth noting that the navigation scenario may be provided to the graphical user interface module 401 in the form of a video stream transmitted from a camera installed shipboard.

Furthermore, in order to increase the ground-based operator's support capabilities, the information simultaneously displayed by the at least one user interface 103 (visor module) by the shipboard bridge operator may also be displayed on the user interface 108' of the ground control station 108.

Furthermore, the user interface 108' of the ground control station 108 processes the received message and provides the information representative of the status of the ship to a monitoring module 701 of the ground control station 108.

The operator of the ground station 108 can provide further support to the shipboard operator from the processing displayed on the desktop of the respective computer.

An item of information representative of the further navigation support (e.g., a further change in rudder angle or speed of the ship 1) is provided to a publication module 702 of the ground control station 108.

The publication module 702 publishes a message on the data communication channel comprising the information representative of the further navigation support.

Such a message is transmitted over the two-way satellite communication channel and, once received by the message routing module 107 of the main control unit 101 of the ship 1, it is routed by the latter to a further recipient application 601 (*SubscriberProxy*), which has subscribed to the possibility of receiving messages published on the data communication channel.

The target application 601 provides the information representative of the further navigation support to a shipboard bridge operator OP.

For example, if the information representing the further navigation support is a reduction in the speed of the ship 1, the transmitted message will be provided to the shipboard bridge operator OP, who will proceed to decrease the speed of the ship 1 to the suggested value.

It is worth noting that, in an embodiment, the ground control station 108 may comprise a plurality of control subsystems SC1, SC2 ... SCN, of similar configuration to each other, each corresponding to a respective subsystem to be controlled by the ship 1.

In the embodiment of figure 7a, the ground control station 108 comprises a first control subsystem SC1 and a second control subsystem SC2, each intended to provide an item of information representative of a further navigational support to a respective target application present shipboard.

In the description of the operation of the system 100 according to the communication architecture of figures 6 and 7a, reference was made to the first control subsystem SC1 of the ground control station 108.

The embodiment described with reference to figures 6 and 7a provides the use of a shipboard message routing module 107 (message broker MQTT) to receive telemetry data generated by a plurality of sources of information (first S1, second S2, and third S3 sensor).

Such data are first forwarded to a *PublisherProxy* module which, as mentioned earlier, encapsulates them in MQTT packets.

A *SubscriberProxy* module of the ground control station 108 receives data from the message broker and routes them to the recipient application (graphical user interface module 401 or monitoring module 701).

The choice of positioning the MQTT message broker shipboard was mainly dictated by the need to minimize the delay in the delivery of data to the bridge operator's user interface 103 (wearable visor module).

According to a further embodiment, shown in figure 7b, in combination with any one of the embodiments described above in which the ground control station 108 is present, the system 100 may comprise a further message routing module 107' (message broker MQTT) on the ground.

Therefore, in this embodiment, the ground control station 108 comprises a further message routing module 107' (figure 7b).

Such an embodiment has many advantages.

The first advantage relates to the possible simplification in the management of data traffic coming from different ships.

Indeed, in the case of a fleet, a specific MQTT message broker must be installed aboard for monitoring each ship, while a *SubscriberProxy* module is needed for each recipient application interested in receiving data on the ground.

Consequently, each *SubscriberProxy* module must be able to interface with the two-way satellite communication channel by communicating with an intermediate gateway.

Furthermore, the MQTT protocol provides a TCP connection for each message *broker-SubscriberProxy* pair, but, given the characteristics of the satellite bidirectional communication channel (e.g., packet corruption), such a connection can be temporarily lost.

Therefore, specific fault-tolerance techniques must be provided for each *SubscriberProxy* module, which guarantee at least one or more reconnection attempts and/or the saving of any data fragments related to the previous TCP session.

Furthermore, the greater the number of *SubscriberProxies,* the greater the load on the channel due to the TCP acknowledgments sent by the individual modules.

The use of a "local" message broker on the ground could at least partially limit the problems just mentioned.

For example, assuming for the moment that the communication between two message brokers is implemented by means of an appropriate protocol, the further ground message routing module 107' acts as a centralized entity to which all the shipboard message routing modules 107 connect and to which they address data packets generated by their respective sources.

No changes are required shipboard, on publisher side, while on the ground the subscribers will have to establish an MQTT session no longer directly with the shipboard message routing modules 107 but instead exclusively with the local one on ground, exploiting MQTT.

In doing so, the further ground message routing module 107' will have the task of interfacing with the satellite gateway and managing any disconnections with one or more of the shipboard message routing modules 107.

Furthermore, the only TCP acknowledgments transmitted over the satellite channel and intended for remote brokers will be those generated by the local broker, thus ensuring better utilization of the channel itself.

A further advantage of using a further ground message routing module 107' (local message broker) is the reduction in response time for future subscribers.

Indeed, under normal conditions, the connection attempt to the message broker by the subscriber requires at least three Round-Trip-Times (RTT): one for establishing the TCP connection, one for creating the MQTT session, and one for sending the SUBSCRIBE message, necessary to make explicit the topics to which to subscribe.

In the case of a geostationary orbit satellite, one RTT corresponds to about 0.5 seconds.

In the scenario shown in figures 6 and 7a, without a ground message broker, this implies that a newly connected subscriber must wait for at least 1.5 seconds before starting to receive useful data.

This is obviously a lower-bound since in case of packet loss the latency of the transaction just described would increase.

Instead, in the case of a further ground message routing module 107', figures 6 and 7b, this could be configured to offer caching functionalities; not only connection times would be reduced but, for each topic, the local message broker could store the last received message to be ready to send it as soon as a new subscriber finishes the connection procedure.

Such a functionality could be implemented by exploiting the message retention natively supported by MQTT.

A generalization of the functionality just described consists in exploiting the further ground message routing module 107' (local message broker) to maintain a history of the data generated by the plurality of shipboard sources of information 102.

As mentioned above, one of the goals is to minimize the latency in the communication between the data-generating sources and the recipient applications interested in receiving it.

Indeed, in the case of time-driven data, the recipient applications are typically interested in receiving "fresh" data to promptly identify any anomalies.

However, there are cases where it may be useful to also maintain a history of the data transmitted for post-processing purposes.

For this purpose, the shipboard message routing module 107 (remote message broker) could be configured to store all data received from publishers so that it can forward the complete data stream to the latter even in the event of a temporary disconnection with the further ground message routing module 107' (local message broker).

As soon as a new subscriber subscribes to the further ground message routing module 107' it will receive all messages transmitted on the topic, either through a sequence of messages or by encapsulating the data in a single packet.

Considering the small size of an MQTT packet, the ability to encapsulate several MQTT data in a single payload has advantages in terms of transmission over the two-way satellite communication channel, especially in terms of transport protocol efficiency.

Finally, considering that a broker-to-broker communication is the only one that actually employs the two-way satellite communication channel, a protocol suite developed ad-hoc for this type of channel could be used.

For example, a variant of TCP specifically designed to optimize throughput over high-latency channels (e.g., http-based protocols for WEB browsing) could be used to transport MQTT messages.

Therefore, limiting their use to the broker-broker network segment would involve relatively little design and development work without sacrificing either potential performance benefits or commercially available applications since the remaining modules (publisher and subscriber) would not be changed.

It is worth noting that the geographical redundancy, i.e., the presence of a further ground message routing module 107' (local message broker) in communication with one or more shipboard message routing modules 107', allows to ensure fault tolerance and resilience.

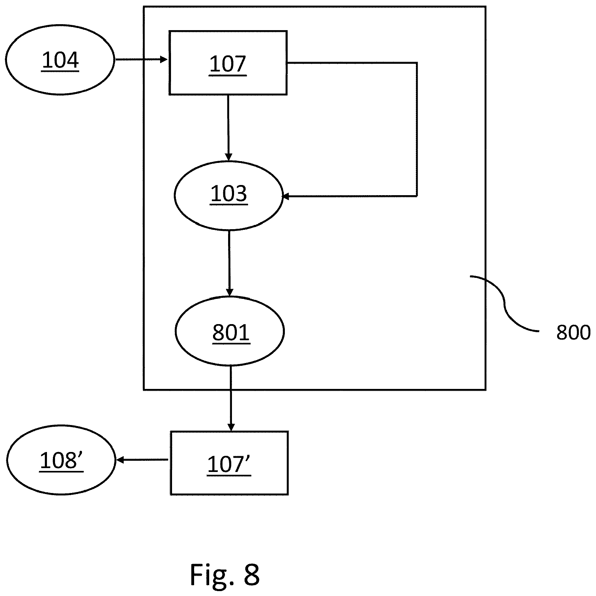

Referring to figure 8, a mode will now be described in which a broker-to-broker communication (e.g., between the shipboard message routing module 107 and the further ground message routing module 107') is supported within an MQTT protocol, e.g. implemented through a development framework named Mosquitto.

The MQTT protocol-based functionality provided by the Mosquitto development framework to support broker-to-broker communication is named bridge.

When a message broker is configured as a bridge it works as a client publishing and subscribing topics on the second message broker.

With reference to figure 8, the publisher module 104 and the subscriber module 108' respectively indicate the shipboard publisher module and a ground subscriber module, which are completely unaware of the presence of a message broker also configured as a bridge node 800 because they respectively communicate with the shipboard message routing module 107 and the further ground message routing module 107' by means of the standard MQTT protocol.

The shipboard message routing module 107 is configured as a message broker relative to the publisher module 104 and as a publisher module 801 for the further broker module 2.

One of the advantages of MQTT protocol-based bridging offered by the Mosquitto development framework is that the system can be easily configured through a textual configuration file stored on the node operating as a bridge.

Some other interesting features are added to this:

- Topic remapping

The message broker operating from bridge 800 can change the topic prefix associated with received messages.

- Multi-broker bridging

Bridging to another message broker is possible in case of disconnection.

A set of <address, port> pairs and a Boolean flag are specified through the configuration file, which allows to specify the behavior of the bridge.

If set to "false", the first <address, port> pair is considered the primary connection.

In case of disconnection, the second address will be attempted and periodically the connection with the main bridge will be reattempted.

If the flag is set to "true", all the connections are considered equally reliable: in case of disconnection, the next address will be used and the connection will remain active until a new disconnection event.

Therefore, the Mosquitto development framework implements broker-to-broker communication through the MQTT protocol by advantageously attempting to reuse and (re)combine the standard MQTT modules.

As mentioned above, relative to the data format, the data generated by the navigation simulation module 104 is encapsulated in specific packets sent through the MQTT protocol.

The structure of a packet varies according to whether the packet contains time-driven or event-driven data.

The main advantage of this solution consists in that it minimizes the overhead, i.e. the number of extra bytes needed to encode the packet.

Clearly, such a solution is feasible when sender and receiver have a priori knowledge of the data that will be exchanged.

An alternative solution consists of encoding the data by exploiting appropriate "formatting", i.e. respecting a set of standardized syntactic rules, e.g. XML and JSON.

The eXtensible Markup Language (XML) is a metalanguage that simplifies the definition of structured documents.

The structure of a document can be made explicit by means of XML Schema Definition (XSD), a language for describing the content of an XML file, which is particularly useful because it simplifies the document validation process.

The XML extensibility is its main peculiarity, which is why it is the basis for the definition of web services based on SOAP/WSDL.

JavaScript Object Notation (JSON) is a data interchange format, based on the Javascript language from which it takes its main feature, i.e. simplicity; the JSON format looks like a sequence of <name, value> pairs with a limited number of supported data types.

The main advantage over XML is the low verbosity because JSON does not use termination tags.

However, both solutions have a common feature; both XML tags and JSON <name, value> pairs are UTF-8 encoded strings, so even a single numeric sample needs extra bytes to be encoded.

Thus, for the same information content, the solution based on defining an ad-hoc format for the data typically produces smaller packets.

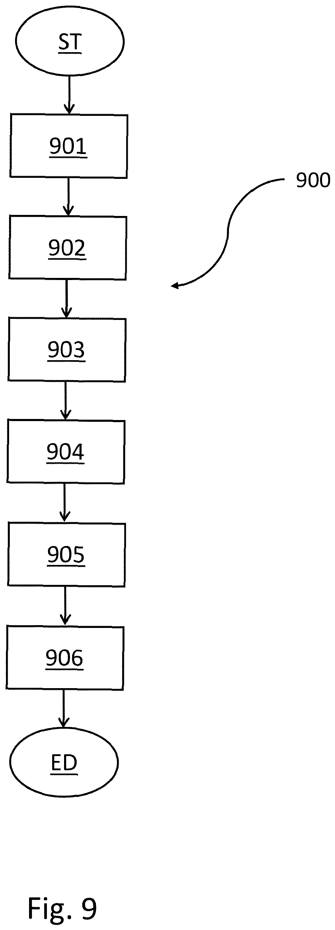

With reference also to the block chart in figure 9, a method 900 for supporting an operator for navigation is provided, hereinafter also named support method or method.

It is worth noting that the components and information mentioned below with the description of the method have already been described previously with reference to the system 100 and will therefore not be repeated for the sake of brevity.

The method 900 comprises a symbolic step of starting ST.

The method 900 comprises a step of determining 901, by a navigation simulation module 104 of a main shipboard control unit 101, based on information representative of a ship 1 provided by a plurality of sources of information 102 operatively connected to the main shipboard control unit 101, information representative of a simulated anti-collision route of the ship 1.

The method 900 further comprises a step of determining 902 information representative of the status of the ship 1, by the navigation simulation module 104, based on the information representative of a ship 1 provided by a plurality of sources of information 102.

The method 900 further comprises a step of generating 903, by the navigation simulation module 104, a message comprising the information representative of a simulated anti-collision route of the ship 1 and information representative of the status of the ship 1.

The method 900 further comprises a step of providing 904, by the navigation simulation module 104, such message on a data communication channel.

The method 900 further comprises a step of sending 905, by a message routing module 107 of the main shipboard control unit 101 operatively connected to the navigation simulation module 104, such message provided on the data communication channel by the navigation simulation module 104 to a set plurality of recipients interested in receiving the messages provided on the data communication channel.

The method 900 further comprises a step of displaying 906, by at least one user interface 103 operatively connected to the main shipboard control unit 101 configured as a recipient interested in receiving a message provided on the data communication channel by the navigation simulation module 104, a processing of such message overlapping or substituting a real navigation scenario visible to a shipboard bridge operator.

The method 900 further comprises a symbolic step of ending ED.

Other steps of the method, according to different embodiments, may correspond to different functionalities of the system 100 previously described according to different embodiments of the system 100.

As can be seen, the object of the present invention is fully achieved in that the system and related method of supporting an operator for navigation has several advantages, some of which have already been stated above.

The system provides support for the decisions in the naval field to a shipboard bridge operator who must decide which navigation maneuver to implement to avoid a possible collision with another obstacle, be it another ship (movable obstacle) or the mainland (fixed obstacle, such as an islet, the quay of a mooring and so forth), also taking into account some boundary conditions, such as for example the need to carry out the maneuver in narrow channels or close to the coast or in any case in bathymetric conditions such as to require a careful and increasingly reliable and timely assessment.

The system combines the functionalities of a navigation simulation module and the functionalities of an augmented reality visor module wearable by a bridge operator to provide advanced support for the decision-making activities of bridge operators, through the real-time visualization of all the navigation information and related scenarios.

Finally, the system can also provide further decision-making support guaranteed by a ground-based operator by virtue of the communication between the shipboard components and a ground control station.

The system can advantageously support the decision by providing the operators (both those shipboard on the bridge and those on the ground) with a unified view of the operational situation, made possible by the fusion of information from different sources (shipboard, ground, third-party ships).

Furthermore, another advantage is related to the fact that the various programming interfaces used by each target application, even if written in different programming languages and for different operating systems, all operate according to the same scheme, utilizing a single shared protocol to exchange information.

Therefore, in all cases, there is a connection to the same message broker which connects all components using a programming interface which in all cases is MQTT, which is available in various versions for different platforms.

A person skilled in the art may make changes and adaptations to the embodiments of the system and method described above or can replace elements with others which are functionally equivalent in order to satisfy contingent needs without departing from the scope of protection of the appended claims.

## APPENDIX

## Collision detection

### Conventions and reference system

With reference to figure 10, the following magnitudes are given in an inertial Earth base $\underline{n}_1$, $\underline{n}_2$ relative to the pole $\Omega$:

- Initial position $S$ of the ship: $\underline{\eta}_S(t_0) = x_s(t_0)\underline{n}_1 + y_S(t_0)\underline{n}_2$
- Speed of the ship: $\underline{v}_S = \dot{x}_S\underline{n}_1 + \dot{y}_S\underline{n}_2$

Similarly, the magnitudes concerning the obstacle, initially detected at point H (figure 10), are assumed to be known:

$$\begin{cases} \underline{\eta}_H(t_0) = x_H(t_0)\underline{n}_1 + y_H(t_0)\underline{n}_2 \\ \underline{v}_H = \dot{x}_H\underline{n}_1 + \dot{y}_H\underline{n}_2 \end{cases} \quad (1)$$

The laws of motion of the ship and the obstacle are then known, assuming that the speed and orientation of the two ships do not vary in time, respectively:

$$\begin{cases} \underline{\eta}_S(t) = \underline{\eta}_S(t_0) + \underline{v}_S t \\ \underline{\eta}_H(t) = \underline{\eta}_H(t_0) + \underline{v}_H t \end{cases} \quad (2)$$

**Determination of the Path Interception Point (PIP)**

The Path Interception Point (PIP, represented by the vector $\underline{\eta}_{PIP} = x_{PIP}\underline{n}_1 + y_{PIP}\underline{n}_2$) is defined as the geometric intersection of the two paths, and can be determined by solving the following system in matrix form:

$$\begin{bmatrix} \dot{y}_S & -\dot{x}_S \\ \dot{y}_H & -\dot{x}_H \end{bmatrix} \begin{bmatrix} x \\ y \end{bmatrix} = \begin{bmatrix} \dot{y}_S x_S - \dot{x}_S y_S \\ \dot{y}_H x_H - \dot{x}_H y_P \end{bmatrix} \qquad (3)$$

The system allows only one solution if the following condition (path incidence condition) occurred:

$$\det\left(\begin{bmatrix} \dot{y}_S & -\dot{x}_S \\ \dot{y}_H & -\dot{x}_H \end{bmatrix}\right) \neq 0 \qquad (4)$$

TPIP indicates the time required to reach the PIP.
The collision occurs if both ships reach the PIP at the same time, or rather, at "excessively" close times. For safety reasons, the ships must always keep a minimum distance taking into account the real operating conditions.
An approach to *collision detection* thus consists in setting that the difference between the TPIPs of ship and obstacle is greater than a threshold time 0.
Such a parameter may, for example, be calculated as a function of the safety distance using the following relationship:

$$\Theta = \frac{D_{safety}}{\min\{|\underline{v}_S|,|\underline{v}_H|\}} \qquad (5)$$

This operation corresponds to verifying that the obstacle is at a distance which is greater than the safety distance at the instant in which the ship engages the PIP. However, there is no guarantee that the obstacle will not breach the safety distance before or after this instant.

**Minimum distance from the obstacle**

The distance between the ship and the obstacle, D(t) is given by the following relationship:

$$D(t) = \left|\underline{\eta}_S(t) - \underline{\eta}_H(t)\right| \qquad (6)$$

It is desired to determine whether the obstacle will pass at a distance less than a minimum safety distance $D_{safety}$.
Therefore, interference with the obstacle will occur if the following inequality occurs:

$$\left|\underline{\eta}_S(t) - \underline{\eta}_H(t)\right| \leq D_{safety} \qquad (7)$$

The following vector magnitudes are defined:
Substituting the equations of motion into (7), we obtain the following inequality of second degree in t:

$$t^2 - 2[(\underline{v}_S - \underline{v}_H) \cdot (\underline{\eta}_S(t_0) - \underline{\eta}_H(t_0))]t + \left|\underline{\eta}_S(t_0) - \underline{\eta}_H(t_0)\right|^2 - D_{safety}^2 \leq 0 \quad (8)$$

The equation associated with inequality (5) has at least one real solution if the discriminant $\Delta$ is non-negative, so the condition for which there will be dangerous interference between the two ships is as follows:

$$[(\underline{v}_S - \underline{v}_H) \cdot (\underline{\eta}_S(t_0) - \underline{\eta}_H(t_0))]^2 - |\underline{v}_S - \underline{v}_H|^2 \left( |\underline{\eta}_S(t_0) - \underline{\eta}_H(t_0)|^2 - D_{safety}^2 \right) \geq 0 \quad (9)$$

By means of the known formulas for solving second-degree equations, the instant $t_{approach}$ in which the obstacle will breach the set limit distance is thus determined. The positions of ship and obstacle at time $t_{approach}$ can be calculated by (2).

It may be interesting to determine the minimum distance at which ship and obstacle will pass each other. The minimum distance is obtained by setting that the derivative relative to the time of (6) is zero.

Therefore, we have:

$$t_{mD} = -\frac{(\underline{v}_S - \underline{v}_H) \cdot (\underline{\eta}_S(t_0) - \underline{\eta}_H(t_0))}{|\underline{v}_S - \underline{v}_H|^2} \quad (10)$$

The minimum distance is obtained by substitution in (6):

$$\min_t D(t) = \left| \underline{\eta}_S(t_0) - \underline{\eta}_H(t_0) - \frac{(\underline{v}_S - \underline{v}_H) \cdot (\underline{\eta}_S(t_0) - \underline{\eta}_H(t_0))}{|\underline{v}_S - \underline{v}_H|^2} (\underline{v}_S - \underline{v}_H) \right| \quad (11)$$

## Claims

1. A system (100) for supporting an operator (OP) for navigation, comprising:

   - a main shipboard control unit (101);
   - a plurality of sources of information (102) representative of a ship (1), the plurality of sources of information (102) being operatively connected to the main shipboard control unit (101);
   - at least one user interface (103) operatively connected to the main shipboard control unit (101);

   the main shipboard control unit (101) comprising:

   - a navigation simulation module (104) configured to determine, based on the information provided by the plurality of sources of information (102), information representative of a simulated anti-collision route of the ship (1), the navigation simulation module (104) further being configured to determine, based on the information provided by the plurality of sources of information (102), information representative of the ship's (1) status, the navigation simulation module (104) further being configured to generate a message comprising the information representative of a simulated anti-collision route of the ship (1) and information representative of the ship's status, said navigation simulation module (104) being configured to provide such message on a data communication channel;
   - a message routing module (107) operatively connected to the navigation simulation module (104), the message routing module (106) being configured to send such message provided on the data communication channel from the navigation simulation module (104) to a set plurality of recipients interested in receiving messages provided on the data communication channel;

   the at least one user interface (103) being configured as a recipient interested in receiving a message provided on the data communication channel by the navigation simulation module (104), the at least one user interface (103) being further configured to display a processing of such message overlapping or substituting a real navigation scenario visible by a shipboard bridge operator (OP), the at least one user interface (103) being a visor module wearable by a shipboard bridge operator (OP), **characterized in that** the system (100) further comprises at least one ground control station (108) operatively connected to the main shipboard control unit (101), the at least one ground control station (108) comprising a respective user interface (108'), the user interface (108') of the at least one ground control station (108) being a display of a computer of the at least one ground control station (108) provided to an operator of the at least one ground control station (108), the user interface (108') of the at least one ground control station (108) being configured as a recipient interested in receiving the message provided on the data communication channel by the navigation simulation module (104) comprising the information representative of a simulated anti-collision route of the ship (1)

and information representative of the ship's status.

2. A system (100) according to claim 1, wherein the navigation simulation module (104) comprises a detection module (105) for detecting the information representative of the ship (1), the detection module (105) being configured to detect the information representative of the ship (1) received from the plurality of sources of information (102).

3. A system (100) according to claim 2, wherein the navigation simulation module (104) further comprises an anti-collision route determination module (106) operatively connected to the detection module (105), the anti-collision route determination module (106) being configured to determine, based on the information received from the detection module (105), the information representative of a simulated anti-collision route of the ship (1), the anti-collision route determination module (106) being configured to determine, based on the information received from the detection module (105), information representative of the ship's (1) status.

4. A system (100) according to claim 3, wherein the anti-collision route determination module (106) is configured to generate the message comprising the information representative of a simulated anti-collision route of the ship and the information representative of the ship's status, the anti-collision route determination module (106) being configured to provide such message on a data communication channel.

5. A system (100) according to any one of the preceding claims, wherein the message routing module (107) is configured to implement a publication/subscription routing mode, the navigation simulation module (104) being configured to publish the message generated on the data communication channel.

6. A system (100) according to claim 5, wherein the message routing module (107) is configured to send the message published on the data communication channel by the navigation simulation module (104) based on the subscriptions received from a set plurality of recipients interested in receiving messages published on the data communication channel.

7. A system (100) according to any one of the preceding claims from 1 to 4, wherein the message routing module (107) is configured to implement a queue routing mode, one of the recipients of the set plurality of recipients interested in receiving the message provided by the navigation simulation module (104) on the data communication channel being configured to send a request to a specific queue corresponding to the message routing module (107), which is configured to send a response on the same queue.

8. A system (100) according to any one of the preceding claims from 1 to 4, wherein the message routing module (107) is configured to implement a so-called memorization/forwarding routing mode, the routing module (107) being configured to memorize messages provided on the data communication channel by the navigation simulation module (104) and forward them to the set plurality of recipients interested in receiving the messages provided on the data communication channel.

9. A system (100) according to any one of the preceding claims, further comprising at least one further user interface (109) operatively connected to the main shipboard control unit (101), the at least one further user interface (109) being a display of a portable device of a further shipboard operator, the at least one further user interface (109) being configured as a recipient interested in receiving the message provided on the data communication channel by the navigation simulation module (104) comprising the information representative of a simulated anti-collision route of the ship (1) and information representative of the ship's status.

10. A system (100) according to claim 1, comprising a further ground message routing module (107'), the at least one ground control station (108) comprising the further message routing module (107').

11. A system (100) according to any one of the preceding claims from 5 to 10, wherein the routing mode implemented by the message routing module (107) is based on an MQTT protocol.

12. A method (100) for supporting an operator (OP) for navigation, comprising steps of:

- determining (901), by a navigation simulation module (104) of a main shipboard control unit (101), based on information representative of a ship (1) provided by a plurality of sources of information (102) operatively connected to the main shipboard control unit (101), information representative of a simulated anti-collision route of the ship (1);

- determining (902), by the navigation simulation module (104), based on the information representative of a ship (1) provided by a plurality of sources of information (102), information representative of the ship's (1) status;
- generating (903), by the navigation simulation module (104), a message comprising the information representative of a simulated anti-collision route of the ship (1) and information representative of the ship's (1) status;
- providing (904), by the navigation simulation module (104), such message on a data communication channel;
- sending (905), by a message routing module (107) of the main shipboard control unit (101) operatively connected to the navigation simulation module (104), such message provided on the data communication channel by the navigation simulation module (104) to a set plurality of recipients interested in receiving the messages provided on the data communication channel; and
- displaying (906), by at least one user interface (103) operatively connected to the main shipboard control unit (101) configured as a recipient interested in receiving a message provided on the data communication channel by the navigation simulation module (104), a processing of such message overlapping or substituting a real navigation scenario visible to a shipboard bridge operator (OP), the at least one user interface (103) being a visor module wearable by a shipboard bridge operator (OP);

**characterized in** further comprising:

- displaying, by a user interface (108') of at least one ground control station (108) operatively connected to the main shipboard control unit (101) and configured as a recipient interested in receiving the message provided on the data communication channel by the navigation simulation module (104), the information representative of a simulated anti-collision route of the ship (1) and the information representative of the ship's status comprised in the message provided on the data communication channel by the navigation simulation module (104).

**Patentansprüche**

1.  System (100) zum Unterstützen eines Bedieners (OP) bei einer Navigation, umfassend:

    - eine Bord-Hauptsteuereinheit (101);
    - eine Mehrzahl von Informationsquellen (102), welche für ein Schiff (1) repräsentativ sind, wobei die Mehrzahl von Informationsquellen (102) betriebsmäßig mit der Bord-Hauptsteuereinheit (101) verbunden ist;
    - wenigstens eine Benutzerschnittstelle (103), welche betriebsmäßig mit der Bord-Hauptsteuereinheit (101) verbunden ist;

    wobei die Bord-Hauptsteuereinheit (101) umfasst:

    - ein Navigationssimulationsmodul (104), welches dazu eingerichtet ist, auf Grundlage der Informationen, welche durch die Mehrzahl von Informationsquellen (102) bereitgestellt werden, Informationen zu bestimmen, welche für eine simulierte Anti-Kollisionsroute des Schiffs (1) repräsentativ sind, wobei das Navigationssimulationsmodul (104) ferner dazu eingerichtet ist, auf Grundlage der Informationen, welche durch die Mehrzahl von Informationsquellen (102) bereitgestellt werden, Informationen zu bestimmen, welche für einen Status des Schiffs (1) repräsentativ sind, wobei das Navigationssimulationsmodul (104) ferner dazu eingerichtet ist, eine Nachricht zu erzeugen, welche die Informationen, welche für eine simulierte Anti-Kollisionsroute des Schiffs (1) repräsentativ sind, und Informationen umfasst, welche für den Status des Schiffs repräsentativ sind, wobei das Navigationsmodul (104) dazu eingerichtet ist, eine derartige Nachricht auf einem Datenkommunikationskanal bereitzustellen;
    - ein Nachricht-Routingmodul (107), welches betriebsmäßig mit dem Navigationssimulationsmodul (104) verbunden ist, wobei das Nachricht-Routingmodul (106) dazu eingerichtet ist, eine derartige Nachricht, welche auf dem Datenkommunikationskanal bereitgestellt ist, von dem Navigationssimulationsmodul (104) zu einer festgelegten Mehrzahl von Empfängern zu senden, welche an einem Empfangen von Nachrichten interessiert sind, welche auf dem Datenkommunikationskanal bereitgestellt werden;

    wobei die wenigstens eine Benutzerschnittstelle (103) als ein Empfänger eingerichtet ist, welcher an einem Empfangen einer Nachricht interessiert ist, welche auf dem Datenkommunikationskanal durch das Navigationssimulationsmodul (104) bereitgestellt ist, wobei die wenigstens eine Benutzerschnittstelle (103) ferner dazu eingerichtet ist, eine Verarbeitung einer derartigen Nachricht anzuzeigen, ein reales Navigationsszenario überlappend oder ersetzend, welches für einen BordBrückenbediener (OP) sichtbar ist, wobei die wenigstens eine Benutzerschnittstelle (103) ein Visiermodul ist, welches durch einen Bord-Brückenbediener (OP) tragbar ist, **dadurch gekenn-**

**zeichnet, dass** das System (100) ferner wenigstens eine Bodenkontrollstation (108) umfasst, welche betriebsmäßig mit der Bord-Hauptsteuereinheit (101) verbunden ist, wobei die wenigstens eine Bodenkontrollstation (108) eine entsprechende Benutzerschnittstelle (108') umfasst, wobei die Benutzerschnittstelle (108') der wenigstens einen Bodenkontrollstation (108) ein Display eines Computers der wenigstens einen Bodenkontrollstation (108) ist, welches für einen Bediener der wenigstens einen Bodenkontrollstation (108) bereitgestellt ist, wobei die Benutzerschnittstelle (108') der wenigstens einen Bodenkontrollstation (108) als ein Empfänger eingerichtet ist, welcher an einem Empfangen der Nachricht interessiert ist, welche auf dem Datenkommunikationskanal durch das Navigationssimulationsmodul (104) bereitgestellt ist, umfassend die Informationen, welche für eine simulierte Anti-Kollisionsroute des Schiffs (1) repräsentativ sind, und Informationen, welche für den Status des Schiffs repräsentativ sind.

2. System (100) nach Anspruch 1, wobei das Navigationssimulationsmodul (104) ein Detektionsmodul (105) zum Detektieren der Informationen umfasst, welche für das Schiff repräsentativ sind, wobei das Detektionsmodul (105) dazu eingerichtet ist, die Informationen zu detektieren, welche für das Schiff (1) repräsentativ sind und welche von der Mehrzahl von Informationsquellen (102) empfangen werden.

3. System (100) nach Anspruch 2, wobei das Navigationssimulationsmodul (104) ferner ein Anti-Kollisionsroute-Bestimmungsmodul (106) umfasst, welches betriebsmäßig mit dem Detektionsmodul (105) verbunden ist, wobei das Anti-Kollisionsroute-Bestimmungsmodul (106) dazu eingerichtet ist, auf Grundlage der Informationen, welche von dem Detektionsmodul (105) empfangen werden, die Informationen zu bestimmen, welche für eine simulierte Anti-Kollisionsroute des Schiffs (1) repräsentativ sind, wobei das Anti-Kollisionsroute-Bestimmungsmodul (106) dazu eingerichtet ist, auf Grundlage der Informationen, welche von dem Detektionsmodul (105) empfangen werden, Informationen zu bestimmen, welche für einen Status des Schiffs (1) repräsentativ sind.

4. System (100) nach Anspruch 3, wobei das Anti-Kollisionsroute-Bestimmungsmodul (106) dazu eingerichtet ist, die Nachricht zu erzeugen, welche die Informationen, welche für eine simulierte Anti-Kollisionsroute des Schiffs repräsentativ sind, und die Informationen umfasst, welche für einen Status des Schiffs repräsentativ sind, wobei das Anti-Kollisionsroute-Bestimmungsmodul (106) dazu eingerichtet ist, eine derartige Nachricht auf einem Datenkommunikationskanal bereitstellen.

5. System (100) nach einem der vorhergehenden Ansprüche, wobei das Nachricht-Routingmodul (107) dazu eingerichtet ist, einen Publikation-/Subskription-Routing-Modus zu implementieren, wobei das Navigationssimulationsmodul (104) dazu eingerichtet ist, die Nachricht zu publizieren, welche auf dem Datenkommunikationskanal erzeugt worden ist.

6. System (100) nach Anspruch 5, wobei das Nachricht-Routingmodul (107) dazu eingerichtet ist, die Nachricht, welche auf dem Datenkommunikationskanal durch das Navigationssimulationsmodul (104) publiziert worden ist, auf Grundlage von Subskriptionen zu senden, welche von einer festgelegten Mehrzahl von Empfängern empfangen worden sind, welche an einem Empfangen von Nachrichten interessiert sind, welche auf dem Datenkommunikationskanal publiziert worden sind.

7. System (100) nach einem der vorhergehenden Ansprüche von 1 bis 4, wobei das Nachricht-Routingmodul (107) dazu eingerichtet ist, einen Warteschleife-Routing-Modus zu implementieren, wobei einer der Empfänger der festgelegten Mehrzahl von Empfängern, welche an einem Empfangen der Nachricht interessiert sind, welche durch das Navigationssimulationsmodul (104) auf dem Datenkommunikationskanal bereitgestellt ist, dazu eingerichtet ist, eine Anfrage für eine spezifische Warteschleife zu senden, welche dem Nachricht-Routingmodul (107) entspricht, welches dazu eingerichtet ist, eine Antwort auf der gleichen Warteschleife zu senden.

8. System (100) nach einem der vorhergehenden Ansprüche von 1 bis 4, wobei das Nachricht-Routingmodul (107) dazu eingerichtet ist, einen sogenannten Speicherung-/Weiterleitung-Routingmodus zu implementieren, wobei das Routing-Modul (107) dazu eingerichtet ist, Nachrichten zu speichern, welche auf dem Datenkommunikationskanal durch das Navigationssimulationsmodul (104) bereitgestellt worden sind, und diese an die festgelegte Mehrzahl von Empfängern weiterzuleiten, welche an einem Empfangen der Nachrichten interessiert sind, welche auf dem Datenkommunikationskanal bereitgestellt worden sind.

9. System (100) nach einem der vorhergehenden Ansprüche, ferner umfassend wenigstens eine weitere Benutzerschnittstelle (109), welche betriebsmäßig mit der Bord-Hauptsteuereinheit (101) verbunden ist, wobei die wenigstens eine weitere Benutzerschnittstelle (109) ein Display einer tragbaren Vorrichtung eines weiteren Bord-Bedieners ist, wobei die wenigstens eine weitere Benutzerschnittstelle (109) als ein Empfänger eingerichtet ist, welcher an einem Empfangen der Nachricht interessiert ist, welche auf dem Datenkommunikationskanal durch das Navigationssimulationsmodul (104) bereitgestellt worden ist, umfassend die Informationen, welche für eine simulierte Anti-Kollisionsroute des Schiffs (1) repräsentativ sind, und die Informationen, welche für den Status des Schiffs repräsentativ sind.

10. System (100) nach Anspruch 1, umfassend ein weiteres Boden-Nachricht-Routingmodul (107'), wobei die wenigstens eine Bodenkontrollstation (108) das weitere Nachricht-Routingmodul (107') umfasst.

11. System (100) nach einem der vorhergehenden Ansprüche von 5 bis 10, wobei der Routing-Modus, welcher durch das Nachricht-Routingmodul (107) implementiert wird, auf einem MQTT-Protokoll basiert.

12. Verfahren (100) zum Unterstützen eines Bedieners (OP) bei einer Navigation, umfassend die folgenden Schritte:

- Bestimmen (901), durch ein Navigationssimulationsmodul (104) einer Bord-Hauptsteuereinheit (101), auf Grundlage von Informationen, welche für ein Schiff (1) repräsentativ sind und welche durch eine Mehrzahl von Informationsquellen (102) bereitgestellt werden, welche mit der Bord-Hauptsteuereinheit (101) betriebsmäßig verbunden sind, von Informationen, welche für eine simulierte Anti-Kollisionsroute des Schiffs (1) repräsentativ sind;
- Bestimmen (902), durch das Navigationssimulationsmodul (104), auf Grundlage der Informationen, welche für ein Schiff (1) repräsentativ sind und welche durch eine Mehrzahl von Informationsquellen (102) bereitgestellt werden, von Informationen, welche für einen Status des Schiffs (1) repräsentativ sind;
- Erzeugen (903), durch das Navigationssimulationsmodul (104), einer Nachricht, welche die Informationen, welche für eine simulierte Anti-Kollisionsroute des Schiffs (1) repräsentativ sind, und Informationen umfasst, welche für den Status des Schiffs (1) repräsentativ sind,
- Bereitstellen (904), durch das Navigationsmodul (104), einer derartigen Nachricht auf einem Datenkommunikationskanal;
- Senden (905), durch ein Nachricht-Routingmodul (107) der Bord-Hauptsteuereinheit (101), welches betriebsmäßig mit dem Navigationssimulationsmodul (104) verbunden ist, einer derartigen Nachricht, welche auf dem Datenkommunikationskanal durch das Navigationsmodul (104) bereitgestellt wird, an eine festgelegte Mehrzahl von Empfängern, welche an einem Empfangen von Nachrichten interessiert sind, welche auf dem Datenkommunikationskanal bereitgestellt werden; und
- Anzeigen (906), durch wenigstens eine Benutzerschnittstelle (103), welche betriebsmäßig mit der Bord-Hauptsteuereinheit (101) verbunden ist und welche als ein Empfänger eingerichtet ist, welcher an einem Empfangen einer Nachricht interessiert ist, welche auf dem Datenkommunikationskanal durch das Navigationssimulationsmodul (104) bereitgestellt wird, einer Verarbeitung einer derartigen Nachricht, ein reales Navigationsszenario überlappend oder ersetzend, welches für einen Bord-Brückenbediener (OP) sichtbar ist, wobei die wenigstens eine Benutzerschnittstelle (103) ein Visiermodul ist, welches durch einen Bord-Brückenbediener (OP) tragbar ist, **dadurch gekennzeichnet, dass** es ferner umfasst:
- Anzeigen, durch eine Benutzerschnittstelle (108') wenigstens einer Bodenkontrollstation (108), welche betriebsmäßig mit der Bord-Hauptsteuereinheit (101) verbunden ist und als ein Empfänger eingerichtet ist, welcher an einem Empfangen der Nachricht interessiert ist, welche auf dem Datenkommunikationskanal durch das Navigationssimulationsmodul (104) bereitgestellt wird, der Informationen, welche für eine simulierte Anti-Kollisionsroute des Schiffs (1) repräsentativ sind, und der Informationen, welche für den Status des Schiffs repräsentativ sind, umfasst in der Nachricht, welche auf dem Datenkommunikationskanal durch das Navigationssimulationsmodul (104) bereitgestellt wird.

**Revendications**

1. Système (100) de soutien d'un opérateur (OP) pendant la navigation, comprenant :

- une unité principale de commande à bord (101) ;
- une pluralité de sources d'informations (102) représentatives d'un navire (1), la pluralité de sources d'informations (102) étant reliées opérationnellement à l'unité principale de commande à bord (101) ;
- au moins une interface utilisateur (103) reliée opérationnellement à l'unité principale de commande à bord (101) :

l'unité principale de commande à bord (101) comprenant :

- un module de simulation de navigation (104) configuré pour déterminer, sur la base des informations fournies par la pluralité de sources d'informations (102), des informations représentatives d'un itinéraire anticollision simulé du navire (1), le module de simulation de navigation (104) étant en outre configuré pour déterminer, sur la base des informations fournies par la pluralité de sources d'informations (102), des informations représentatives du statut du navire (1), le module de simulation de navigation (104) étant en outre configuré pour générer un message comprenant les informations représentatives d'un itinéraire anticollision simulé du navire (1) et les informations représentatives du statut du navire, ledit module de simulation de navigation (104) étant configuré pour fournir un tel message sur un canal de communication de données ;
- un module d'acheminement de message (107) relié opérationnellement au module de simulation de navigation (104), le module d'acheminement de message (106) étant configuré pour envoyer un tel message fourni sur le canal de communication de données depuis le module de simulation de navigation (104) à une pluralité définie de destinataires intéressés par la réception de messages fournis sur le canal de communication de données ;

ledit au moins une interface utilisateur (103) étant configurée en tant qu'un destinataire intéressé par la réception d'un message fourni sur le canal de communication de données par le module de simulation de navigation (104), ledit au moins une interface utilisateur (103) étant en outre configurée pour afficher un traitement d'un tel message par chevauchement ou substitution d'un scénario de navigation réel visible par un pontier à bord (OP), ledit au moins une interface utilisateur (103) étant un module de visière pouvant être porté par un pontier à bord (OP), **caractérisé en ce que** le système (100) comprend en outre au moins un poste de commande à terre (108) relié opérationnellement à l'unité principale de commande à bord (101), ledit au moins un poste de commande à terre (108) comprenant une interface utilisateur (108') respective, l'interface utilisateur (108') dudit au moins un poste de commande à terre (108) étant un écran d'un ordinateur dudit au moins un poste de commande à terre (108) fourni à un opérateur dudit au moins un poste de commande à terre (108), l'interface utilisateur (108') dudit au moins poste de commande à terre (108) étant configurée en tant qu'un destinataire intéressé par la réception du message fourni sur le canal de communication de données par le module de simulation de navigation (104) comprenant les informations représentatives d'un itinéraire anticollision simulé du navire (1) et les informations représentatives du statut du navire.

2. Système (100) selon la revendication 1, le module de simulation de navigation (104) comprenant un module de détection (105) pour détecter les informations représentatives du navire (1), le module de détection (105) étant configuré pour détecter les informations représentatives du navire (1) reçues depuis la pluralité de sources d'informations (102).

3. Système (100) selon la revendication 2, le module de simulation de navigation (104) comprenant en outre un module de détermination d'itinéraire anticollision (106) relié opérationnellement au module de détection (105), le module de détermination d'itinéraire anticollision (106) étant configuré pour déterminer, sur la base des informations reçues depuis le module de détection (105), les informations représentatives d'un itinéraire anticollision simulé du navire (1), le module de détermination d'itinéraire anticollision (106) étant configuré pour déterminer, sur la base des informations reçues depuis le module de détection (105), des informations représentatives du statut du navire (1).

4. Système (100) selon la revendication 3, le module de détermination d'itinéraire anticollision (106) étant configuré pour générer le message comprenant les informations représentatives d'un itinéraire anticollision simulé du navire et les informations représentatives du statut du navire, le module de détermination d'itinéraire anticollision (106) étant configuré pour fournir un tel message sur un canal de communication de données.

5. Système (100) selon l'une quelconque des revendications précédentes, le module d'acheminement de message (107) étant configuré pour mettre en oeuvre un mode d'acheminement de publication/abonnement, le module de simulation de navigation (104) étant configuré pour publier le message généré sur le canal de communication de données.

6. Système (100) selon la revendication 5, le module d'acheminement de message (107) étant configuré pour envoyer le message publié sur le canal de communication de données par le module de simulation de navigation (104) sur la base des abonnements reçus depuis une pluralité définie de destinataires intéressés par la réception de messages publiés sur le canal de communication de données.

7. Système (100) selon l'une quelconque des revendications 1 à 4, le module d'acheminement de message (107) étant configuré pour mettre en oeuvre un mode d'acheminement de file d'attente, l'un des destinataires de la pluralité définie de destinataires intéressés par la réception du message fourni par le module de simulation de navigation (104) sur le canal de communication de données étant configuré pour envoyer une demande à une file d'attente spécifique correspondant au module d'acheminement de message (107), qui est configuré pour envoyer une réponse sur la même file d'attente.

8. Système (100) selon l'une quelconque des revendications 1 à 4, le module d'acheminement de message (107) étant configuré pour mettre en oeuvre ce que l'on appelle un mode d'acheminement de mémorisation/transfert, le module d'acheminement (107) étant configuré pour mémoriser des messages fournis sur le canal de communication de données par le module de simulation de navigation (104) et les transférer à la pluralité définie de destinataires intéressés par la réception des messages fournis sur le canal de communication de données.

9. Système (100) selon l'une quelconque des revendications précédentes, comprenant en outre au moins une autre interface utilisateur (109) reliée opérationnellement à l'unité principale de commande à bord (101), ledit au moins une autre interface utilisateur (109) étant un écran d'un dispositif portable d'un autre opérateur à bord, ledit au moins une autre interface utilisateur (109) étant configurée en tant qu'un destinataire intéressé par la réception du message fourni sur le canal de communication de données par le module de simulation de navigation (104) comprenant les informations représentatives d'un itinéraire anticollision simulé du navire (1) et les informations représentatives du statut du navire.

10. Système (100) selon la revendication 1, comprenant un autre module d'acheminement de message à terre (107'), ledit au moins un poste de commande à terre (108) comprenant l'autre module d'acheminement de message (107').

11. Système (100) selon l'une quelconque des revendications 5 à 10, le mode d'acheminement mis en oeuvre par le module d'acheminement de message (107) étant basé sur un protocole MQTT.

12. Procédé (100) de soutien d'un opérateur (OP) pendant la navigation, comprenant les étapes suivantes :

- la détermination (901), par un module de simulation de navigation (104) d'une unité principale de commande à bord (101), sur la base d'informations représentatives d'un navire (1) fournies par une pluralité de sources d'informations (102) reliées opérationnellement à l'unité principale de commande à bord (101), d'informations représentatives d'un itinéraire anticollision simulé du navire (1) ;
- la détermination (902), par le module de simulation de navigation (104), sur la base des informations représentatives d'un navire (1) fournies par une pluralité de sources d'informations (102), d'informations représentatives du statut du navire (1) ;
- la génération (903), par le module de simulation de navigation (104), d'un message comprenant les informations représentatives d'un itinéraire anticollision simulé du navire (1) et les informations représentatives du statut du navire (1) ;
- la fourniture (904), par le module de simulation de navigation (104), d'un tel message sur un canal de communication de données ;
- l'envoi (905), par un module d'acheminement de message (107) de l'unité principale de commande à bord (101) relié opérationnellement au module de simulation de navigation (104), d'un tel message fourni sur le canal de communication de données depuis le module de simulation de navigation (104) à une pluralité définie de destinataires intéressés par la réception des messages fournis sur le canal de communication de données ; et
- l'affichage (906), par ladite au moins une interface utilisateur (103) reliée opérationnellement à l'unité principale de commande à bord (101) configurée en tant qu'un destinataire intéressé par la réception d'un message fourni sur le canal de communication de données par le module de simulation de navigation (104), d'un traitement d'un tel message par chevauchement ou substitution d'un scénario de navigation réel visible par un pontier à bord (OP), ladite au moins une interface utilisateur (103) étant un module de visière pouvant être porté par un pontier à bord (OP) ;

**caractérisé en ce qu'**il comprend en outre ;

- l'affichage, par une interface utilisateur (108') dudit au moins un poste de commande à terre (108) reliée opérationnellement à l'unité principale de commande à bord (101) et configurée en tant qu'un destinataire intéressé par la réception du message fourni sur le canal de communication par le module de simulation de navigation (104), des informations représentatives d'un itinéraire anticollision simulé du navire (1) et des informations représentatives du statut du navire comprises dans le message fourni sur le canal de communication de données par le module de simulation de navigation (104).

Fig. 1

Fig. 2

EP 3 907 470 B1

Fig. 3

103

401

403

405

402

404

Fig. 4

EP 3 907 470 B1

Fig. 5

Fig. 6

EP 3 907 470 B1

Fig. 7a

Fig. 7b

Fig. 8

Fig. 9

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013238232 A1
- US 2019360810 A1
- US 2020090414 A1

**Non-patent literature cited in the description**

- *MQTT (Message Queueing Telemetry Transport) Protocol - Wikipedia),* 21 March 2019